# EUROPEAN PATENT SPECIFICATION

(11) **EP 3 816 859 B1**
(45) Date of publication and mention of the grant of the patent: **20.11.2024**
(21) Application number: 19826158.8
(22) Date of filing: 20.05.2019
(51) Int. Cl.: G06K 17/00, G05B 19/05, G06K 7/10, H04B 1/59

(54) **RFID COMMUNICATION UNIT, METHOD FOR CONTROLLING RFID COMMUNICATION UNIT, AND PROGRAM**
RFID-KOMMUNIKATIONSEINHEIT, VERFAHREN ZUR STEUERUNG DER RFID-KOMMUNIKATIONSEINHEIT UND PROGRAMM
UNITÉ DE COMMUNICATION RFID, PROCÉDÉ DE COMMANDE D'UNITÉ DE COMMUNICATION RFID ET PROGRAMME

(30) Priority: 27.06.2018 JP 2018122040
(43) Date of publication of application: 05.05.2021
(73) Proprietor: OMRON Corporation, Shiokoji-dori, Shimogyo-ku, Kyoto-shi Kyoto 600-8530 (JP)
(72) Inventor: NAKANO, Yoshimitsu, Kizugawa-shi, Kyoto 619-0283 (JP)
(74) Representative: Becker, Eberhard
(86) International application number: PCT/JP2019/019970
(87) International publication number: WO 2020/003813

(56) References cited:
- EP-A1- 1 657 606
- EP-A2- 3 229 167
- WO-A1-2012/169037
- WO-A2-2006/094179
- JP-A- 2010 186 390
- JP-A- 2016 130 995
- US-A1- 2008 309 490

## Description

### BACKGROUND

### Technical Field

The present invention relates to a RFID communication unit, a method for controlling the RFID communication unit, and a program.

### Related Art

Conventionally, a RFID communication unit has been known, which reads and writes data from a RF tag attached to an individual and exchanges the data with an industrial control device such as a programmable controller (Programmable Logic Controller, hereinafter abbreviated as "PLC") in order to perform individual management at a manufacturing site or a distribution site. In recent years, information for individual management has increased, and data handled by the RFID communication unit has increased in capacity.

In the RFID communication unit, data is read and written by wireless communication with the RF tag, and it is common to collectively transfer the data between the RFID communication unit and the RF tag even when the data has increased in capacity.

EP patent application no. EP 3229167 A2 teaches a wireless tag communication apparatus that includes a plurality of communication units configured to communicate with a wireless tag. The communication units are disposed such that communicable ranges of the communication units overlap each other. A control unit controls each of the plurality of communication units to alternate between a communication state and a pause state. When the wireless tag is positioned within communication ranges of both first and second communication units of the plurality of communication units, the control unit controls the first communication unit to be in the communication state and the second communication unit to be in the pause state. US patent application no. US 2008309490 A1 relates to a method for scheduling communications over a wireless communication subsystem and a radio frequency identification (RFID) communication subsystem, said method comprising determining one or more periods of activity of the wireless communication subsystem; deriving one or more periods of non-activity on the basis of the one or more determined periods of activity; synchronizing an operation of the radio frequency identification (RFID) communication subsystem with the one or more periods of non-activity; and triggering the operation of the radio frequency identification (RFID) communication subsystem in accordance with the one or more derived periods of non-activity to enable substantially concurrent communications operation of the wireless communication subsystem and the radio frequency identification (RFID) communication subsystem. EP patent application no. EP 1657606 A1 relates to systems and methods that provide electronic data (e.g., Electronic Product Code (EPC) data) obtained from Radio Frequency Identification (RFID) tags by RFID readers and/or from servers to one or more industrial components (e.g., controllers, programmable logic controllers, modules, etc.). The systems and methods employ component that processes, if desired, and stores received electronic data as records within a table. Processing includes filtering for data of interest and/or formatting the data in a suitable structure. Storage can include delineating related electronic data across rows the table and types of data across columns of a row. Upon receiving a subscription and/or request for electronic data from the one or more industrial components, the data can be retrieved and conveyed to the subscribing and/or requesting components. A patent application no. WO 2006/094179 A2 teaches apparatuses, systems for, and methods of transporting digital signals and radio-frequency RF signals. An intelligent network and corresponding method are provided for transporting RF signals to an RFID antenna and transporting digital signals to a controller. The intelligent network is implemented with a manager unit for controlling a plurality of network devices to facilitate the efficient management of RFID-enabled devices. The network devices include a combination router/switch, which has the capability of switching both digital data and RF data, RFID readers, RFID reader/writer pads, and other devices.

### [Literature of related art]

### [Patent literature]

Patent literature 1: Japanese Patent Laid-Open No. 2009-205369 (published on September 10, 2009)

### SUMMARY

The invention is defined by the independent claims. Optional features of the invention are provided by the dependent claims.

### [Problems to be Solved]

By the way, in order to realize control with high speed and high precision in the PLC, it is necessary to make a control period of the PLC constant and short. However, if the capacity of the data exchanged between the PLC and the RFID communication unit is large, it is necessary to suppress the data exchange capacity at the expense of a transfer speed so that the control period of the PLC becomes short, or to enlarge the data exchange capacity at the expense of the control period of the PLC so as to achieve acceleration.

Meanwhile, there is a demand for a technique capable of achieving both acceleration in the data transfer and uniformity in the control period of the PLC even when a large capacity of data is exchanged between the PLC and the RFID communication unit.

One aspect of the present invention is to realize a technique capable of achieving both acceleration in the data transfer and uniformity in the control period of the PLC.

### [Means to Solve the Problems]

In order to solve the above-described problems, a RFID communication unit according to one aspect of the present invention includes a higher-order communication control part for performing communication with a higher-order controller in a predetermined communication period, wherein the higher-order controller is external to the RFID communication unit, the higher-order controller is configured to communicate with the RFID communication unit by exchanging a plurality of data, each data having the same fixed data exchange size, and each data being communicated during a fixed communication period, and a RF communication control part for performing at least one of reading and writing of data with a RF tag by wireless communication, the RFID communication unit being characterized in that the RF communication control part is configured to select a division transfer method for dividing data subjected to at least one of reading and writing with the RF tag into a plurality of data packets, each data packet having the same data exchange size and each data package being communicable in one communication period in the higher-order communication control part, and transferring each of the plurality of data packets to the higher-order controller or to the RF tag in the one communication period, wherein the RF communication control part is configured to concurrently execute the wireless communication with the RF tag during the communication period in which communication by the higher-order communication control part is performed; or a batch transfer method for collectively transferring data subjected to at least one of reading and writing with the RF tag, wherein the data is transferred to the RF tag in one single communication period, wherein the data is then transferred to, or was transferred beforehand from, the higher-order controller in another communication session.

Further, in order to solve the above-described problems, a method for controlling the RFID communication unit according to one aspect of the present invention includes a step of performing, by a higher-order communication control part of the RFID communication unit, communication with a higher-order controller in a predetermined communication period, wherein the higher-order controller is external to the RFID communication unit, the higher-order controller communicates with the RFID communication unit by exchanging a plurality of data, each data having the same fixed data exchange size, and each data being communicated during a fixed communication period, and a step of performing, by a RF communication part of the RFID communication unit, at least one of reading and writing of data with a RF tag by wireless communication. The method being characterized in further comprising: a step of selecting, by the RF communication part of the RFID communication unit, a division transfer method or a batch transfer method, wherein the division transfer method for dividing data subjected to at least one of reading and writing with the RF tag into a plurality of data packets, each data packet having the same data exchange size and each data package being communicable in one communication period in the higher-order communication control part, and transferring each of the plurality of data packets to the higher-order controller or to the RF tag n the one communication period, wherein the wireless communication with the RF tag is concurrently executed during the communication period in which the communication with the higher-order controller is performed, and the batch transfer method for collectively transferring data subjected to at least one of reading and writing with the RF tag, wherein the data is transferred to the RF tag in one single communication period, and wherein the data is then transferred to, or was transferred beforehand from, the higher-order controller (50) in another communication session.

Further, in order to solve the above-described problems, a product including one or more tangible computer-readable non-transitory storage media comprising computer-executable instructions which, when executed by a computer associated with a RFID communication unit, cause the RFID communication unit to carry out all the steps of the method for controlling the RFID communication unit.

### [Effect]

According to one aspect of the present invention, it is possible to achieve both acceleration in data transfer and uniformity in a control period of a PLC.

### BRIEF DESCRIPTION OF THE DRAWINGS

FIG. 1 is a block diagram showing a main configuration of a RFID communication unit according to Embodiment 1.
FIG. 2 is a diagram showing the flow of data among a PLC, the RFID communication unit and a RF tag, and is a diagram showing the flow of reading data from the RF tag.
FIG. 3 is a diagram showing the flow of data among the PLC, the RFID communication unit and the RF tag, wherein (a) of FIG. 3 shows a total processing time in a conventional RFID communication unit, and (b) of FIG. 3 shows a total processing time in the RFID communication unit of Embodiment 1.
FIG. 4 is a diagram showing the flow of data among the PLC, the RFID communication unit and the RF tag, and is a diagram showing the flow of writing data to the RF tag.
FIG. 5 is a block diagram showing a main configuration of a RFID communication unit according to Embodiment 2.
FIG. 6 is a diagram showing the flow of data among the PLC, the RFID communication unit and the RF tag, wherein (a) of FIG. 6 shows a total processing time in the case of a division method, and (b) of FIG. 6 shows a total processing time in the case of a batch method.
FIG. 7 is a diagram showing the flow of data among the PLC, the RFID communication unit and the RF tag, wherein (a) of FIG. 7 shows a total processing time in the case of the division method, and (b) of FIG. 7 shows a total processing time in the case of the batch method.
FIG. 8 is a diagram showing the flow of data among the PLC, the RFID communication unit and the RF tag, wherein (a) of FIG. 8 shows a total processing time in the case of the division method, and (b) of FIG. 8 shows a total processing time in the case of the batch method.
FIG. 9 is a diagram showing the flow of data among the PLC, the RFID communication unit and the RF tag, wherein (a) of FIG. 9 shows a total processing time in the case of the division method, and (b) of FIG. 9 shows a total processing time in the case of the batch method.
FIG. 10 is a block diagram showing a main configuration of a RFID communication unit according to Embodiment 3.
FIG. 11 is a diagram showing the flow of data among the PLC, the RFID communication unit and the RF tag, wherein (a) of FIG. 11 shows a total processing time in the case of the batch method, and (b) of FIG. 11 shows a total processing time in the case of performing retry efficiency processing.

### DESCRIPTION OF THE EMBODIMENTS

Hereinafter, an embodiment according to one aspect of the present invention (hereinafter, also referred to as "the present embodiment") is described with reference to the drawings.

### §1 Application example

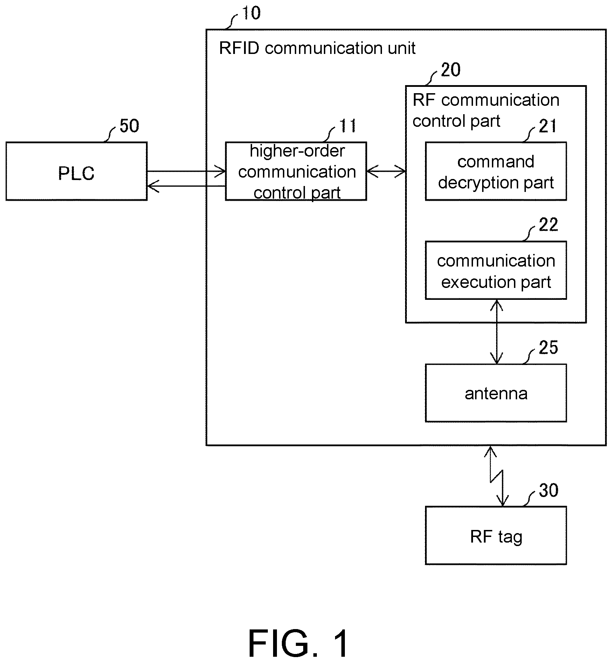

First, an example of a scene in which the present invention is applied is described with reference to FIG. 1. FIG. 1 shows an example of a main configuration of a RFID communication unit 10 according to the present embodiment.

For example, as shown in FIG. 1, the RFID communication unit 10 according to the present embodiment is used as an input machine of a programmable logic controller (PLC) 50 which is a higher-order controller. The RFID communication unit 10 performs communication with the PLC 50 in a predetermined communication period by the control of a higher-order communication control part 11. Further, the RFID communication unit 10 performs at least one of data reading and data writing with a RF tag 30 by wireless communication based on the control of a RF communication control part 20 in accordance with a command from the PLC 50. Further, the RFID communication unit 10 receives response data from the RF tag 30 and transfers the received response data to the PLC 50.

The RF tag 30 is attached to an object such as a part or a product in order to improve traceability at a production site for example.

The RFID communication unit 10 communicates in the predetermined communication period in accordance with a control period of the PLC 50, and divides data into a data exchange size which is communicable in one communication period to transfer the data by a plurality of times of communication. Further, the RFID communication unit 10 concurrently executes wireless communication with the RF tag 30 for a communication duration in which communication with the PLC 50 is performed.

The RFID communication unit 10 first receives a command from the PLC 50. Subsequently, the RFID communication unit 10 performs at least one of reading and writing with the RF tag. At this time, the RFID communication unit 10 divides data subjected to at least one of reading and writing with the RF tag 30 into a data exchange size that is communicable in one communication period with the PLC 50, and transfers the divided data to the RF tag 30 by a plurality of times of communication. Then, the RFID communication unit 10 transfers a transfer result with the RF tag 30 to the PLC 50. The RFID communication unit 10 concurrently transfers the transfer result with the RF tag 30 to the PLC 50 when the wireless communication with the RF tag 30 is performed for each wireless communication with the RF tag 30.

Thereby, the RFID communication unit 10 receives the command from the PLC 50, performs at least one of reading and writing with the RF tag, shortens a total processing time of transferring the transfer result with the RF tag to the PLC 50, and keeps the control period of the PLC 50 constant by performing communication with the PLC in the predetermined communication period.

### §2 Configuration example

Hereinafter, the configuration of the RFID communication unit 10 according to the embodiment of the present invention is described in detail with reference to FIGS. 1 to 4.

### [Embodiment 1]

Hereinafter, Embodiment 1 of the present invention is described in detail.

As described above, the RFID communication unit 10 includes the higher-order communication control part 11, the RF communication control part 20, and an antenna 25.

The higher-order communication control part 11 executes wired communication with the PLC 50 via a bus or a network. The higher-order communication control part 11 can exchange data with the PLC 50 at a high speed of several microseconds to several milliseconds per byte.

The antenna 25 realizes the wireless communication with the RF tag 30. Based on the control of the RF communication control part 20, the antenna 25 transmits an electromagnetic wave including a command signal and accepts a response signal from the RF tag 30 with respect to the command.

The RF communication control part 20 performs at least one of data reading and data writing with the RF tag via the antenna 25. In addition, the RF communication control part 20 may be a calculation device having a function of comprehensively controlling each part of the RFID communication unit 10. The RF communication control part 20 may control each part of the RFID communication unit 10 in a manner that, for example, one or more processors (such as a CPU) execute a program stored in one or more memories (such as a RAM or a ROM).

The RF communication control part 20 includes a command decryption part 21 and a communication execution part 22.

The command decryption part 21 decodes the commands received from the PLC 50 by the function of the higher-order communication control part 11. The commands received from the PLC 50 include a write command that specifies data writing with the RF tag 30 and a read command that specifies data reading with the RF tag 30. The write command and the read command include a data transfer period between the PLC 50 and the RFID communication unit 10, a communication period between the PLC 50 and the RFID communication unit 10, and data about the data exchange size.

The command decryption part 21 converts data included in the write command received from the PLC 50 into data writable to the RF tag 30. The command decryption part 21 converts, for example, data of octal code, hexadecimal code, 64-ary code or the like included in the write command which is received from the PLC 50 into data of ASCII code.

Further, the command decryption part 21 converts data read with the RF tag 30 into data that can be transferred to the PLC 50 as a response to the read command received from the PLC 50. The command decryption part 21 converts, for example, numeral string data read from the RF tag 30 into the data of octal code, hexadecimal code, 64-ary code or the like.

The communication execution part 22 transmits a command signal and receives a response signal with respect to the RF tag 30 via the antenna 25. Further, the communication execution part 22 may be configured to be capable of executing decoding processing of the response signal received from the RF tag 30. In addition, the wireless communication with the RF tag 30 via the antenna 25 is communication with a speed of several milliseconds to several tens of milliseconds per byte.

### [About data transmission/reception performed by RFID communication unit]

### (Data reading)

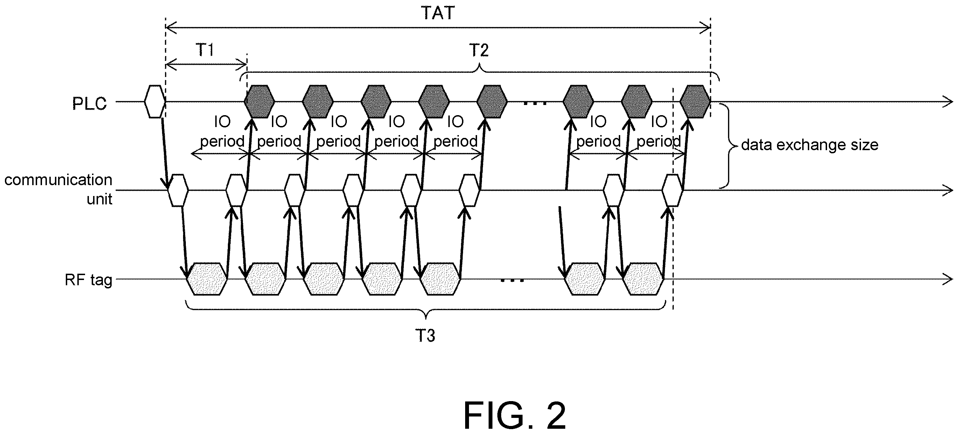

FIG. 2 is diagram schematically showing the flow of data when the RFID communication unit 10 performs data reading with the RF tag 30 in accordance with the read command received from the PLC 50 and transfers the data to the PLC 50. As shown in FIG. 2, when the RFID communication unit 10 receives a read command which is the command transferred from the PLC 50, the RFID communication unit 10 starts reading data from the RF tag 30. The data exchange size between the PLC 50 and the RFID communication unit 10 is a data exchange size that is communicable in one communication period in the higher-order communication control part 11, and is fixed. The RF communication control part 20 of the RFID communication unit 10 divides the data read from the RF tag 30 into a size the same as the data exchange size with the PLC 50, and transfers the data by a plurality of times of communication.

The RF communication control part 20 of the RFID communication unit 10 performs decoding processing and conversion processing on the data read from the RF tag 30 by one communication, and transfers the data to the PLC 50 according to a communication period (IO period) with the PLC 50. Further, the RF communication control part 20 of the RFID communication unit 10 concurrently transfers the transfer result with the RF tag 30 to the PLC 50 and performs the wireless communication with the RF tag 30 to read next division data.

In this way, the RF communication control part 20 concurrently executes the wireless communication with the RF tag 30 during the communication period in which the communication with the PLC 50 by the higher-order communication control part 11 is performed. Thereby, a total processing time TAT can be shortened compared with the case in which a large capacity of data collectively read from the RF tag 30 is divided into a data exchange size that is communicable in one communication period with the PLC 50 and is transferred to the PLC 50.

Here, the total processing time TAT is a time that includes a command transfer time required for the transfer of the read command which is a command from the PLC 50, a total RF communication time T3 required when data to be read with the RF tag 30 is transferred between the RFID communication unit 10 and the RF tag 30, and a response transfer time T2 required when the transfer result with the RFID communication unit 10 and the RF tag 30 is transferred to the PLC 50.

In this way, the total processing time TAT can be made shorter than T2 + T3 by concurrently performing the wireless communication with the RF tag 30 during the communication period with the PLC 50. Therefore, the data transfer time can be shortened, and high-speed data transfer can be realized.

Further, because the wireless communication with the RF tag 30 is concurrently performed to read the next division data when the transfer result with the RF tag 30 is transferred to the PLC 50, a time T1 from receiving the command from the PLC 50 until starting transferring the transfer result to the PLC 50 can be shortened, and a response to a control target in the PLC 50 can be made faster.

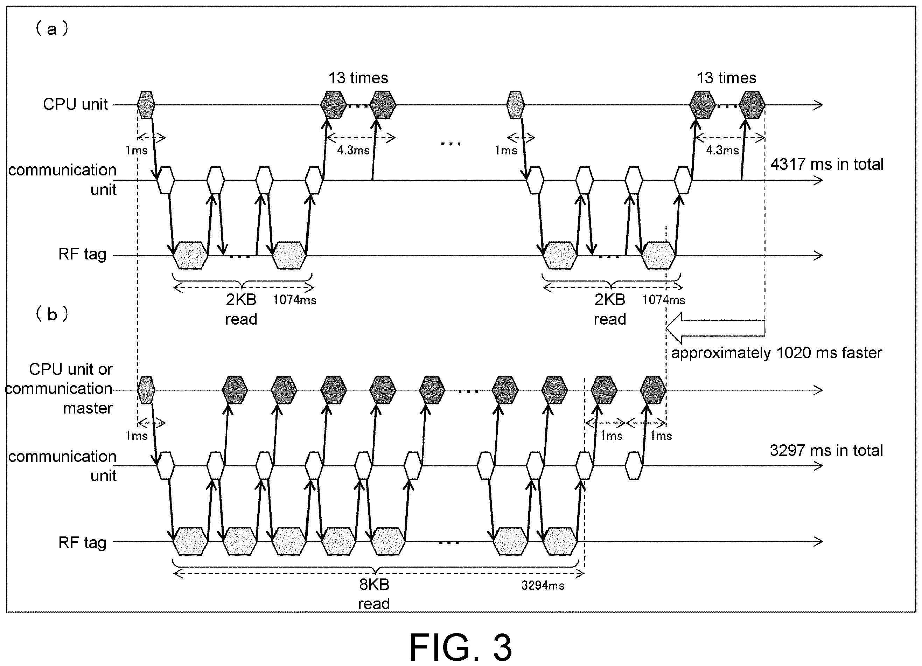

(a) and (b) of FIG. 3 are diagrams showing the total processing time TAT when the communication period between the PLC 50 and the RFID communication unit 10 is 1 ms, the data exchange size between the PLC 50 and the RFID communication unit 10 is 128 bytes, and a total data reading size is 8 Kbytes. (a) of FIG. 3 shows an example when the data read using a conventional RFID communication unit is divided into each 128 bytes and transferred to the PLC 50. (b) of FIG. 3 shows an example when the RFID communication unit 10 of the present embodiment is used to concurrently perform reading from the RF tag 30 and data transfer to the PLC 50.

In the example shown in (a) of FIG. 3, the RFID communication unit 10 collectively reads data from the RF tag 30 by 2 Kbytes, divides the read 2 Kbytes of data into each 128 bytes and transfers the data to the PLC 50. The RFID communication unit 10 requires 1074 ms to read 2 Kbytes of data from the RF tag 30. The total processing time TAT is 4317 ms which is the sum of a transfer time of the command from the PLC 50 to the RFID communication unit 10, a transfer time of the data from the RFID communication unit 10 to the PLC 50, and a read time of the data from the RF tag 30.

In addition, in a conventional transfer method, in order to transfer a response result from the RFID communication unit 10 to the PLC, the communication period of the PLC is temporarily extended from 1 ms to 4.3 ms, and thereby the control period of the PLC is disturbed.

Meanwhile, in the example shown in (b) of FIG. 3, the RFID communication unit 10 requires 3294 ms to divide the data transferred from the RF tag 30 by one communication into each 128 bytes and read 8 Kbytes of data. Then, the total processing time TAT is 3297 ms which is the sum of a transfer time of the command from the PLC 50 to the RFID communication unit 10, a transfer time of the data from the RFID communication unit 10 to the PLC 50, and a read time of the data from the RF tag 30.

In other words, in the example shown in (b) of FIG. 3, the wireless communication with the RF tag 30 is concurrently executed during the communication period in which the communication with the PLC 50 by the higher-order communication control part 11 is performed, the reading of the data from the RF tag 30 and the transfer of the data to the PLC 50 are performed concurrently and the data is transferred by the division transfer method. In this way, in the transfer method according to the present embodiment, while the response result is transferred from the RFID communication unit 10 to the PLC 50, the communication period of the PLC 50 is not extended and the control period of the PLC 50 is not disturbed.

In the example of the conventional transfer method shown in (a) of FIG. 3, a large capacity of data collectively read from the RF tag 30 is divided into a data exchange size that is communicable in one communication period with the PLC 50 and is transferred to the PLC 50 by a batch transfer method. Compared with the conventional transfer method, the transfer method of the present embodiment can realize acceleration of 1020 ms. In this way, according to the transfer method of the present embodiment, by concurrently executing the wireless communication with the RF tag 30 during the communication period in which the communication with the PLC 50 by the higher-order communication control part 11 is performed, both acceleration in the data transfer and uniformity in the control period of the PLC can be achieved.

### (Data writing)

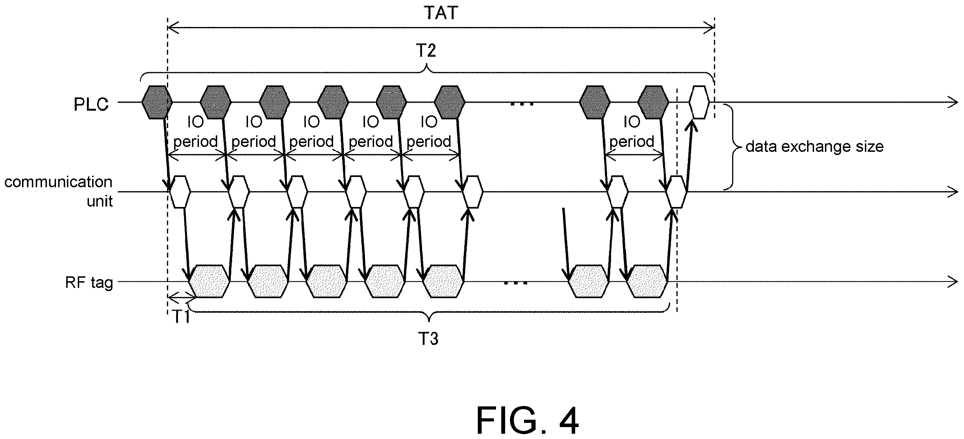

FIG. 4 is a diagram schematically showing the flow of data when the RFID communication unit 10 writes the data received from the PLC 50 to the RF tag 30 in accordance with the write command which is the command received from the PLC 50. As shown in FIG. 4, when the RFID communication unit 10 receives the write
As shown in FIG. 4, when the RFID communication unit 10 receives the write command from the PLC 50, the RFID communication unit 10 starts writing data to the RF tag 30. The data exchange size between the PLC 50 and the RFID communication unit 10 is a data exchange size that is communicable in one communication period in the higher-order communication control part 11, and is fixed. The RF communication control part 20 of the RFID communication unit 10 transfers data having the same size as the data exchange size with the PLC 50 to the RF tag 30 by one communication and writes the data. In this way, the RF communication control part 20 of the RFID communication unit 10 transfers and writes data having the same size as the data exchange size with the PLC 50 to the RF tag 30 by one communication.

The RF communication control part 20 of the RFID communication unit 10 concurrently writes data to the RF tag 30 and receives next data transferred from the PLC 50 by concurrently executing the wireless communication with the RF tag 30 during the communication period in which the communication by the higher-order communication control part 11 is performed.

In this way, the RFID communication unit 10 concurrently performs data transfer with the PLC 50 and data writing with the RF tag 30. Thereby, compared with collectively writing the data for writing which is transferred from the PLC 50 to the RF tag 30, the time T1 from receiving the command from the PLC 50 until starting writing the data to the RF tag 30 can be shortened.

Thereby, the total processing time TAT can be made shorter than the sum of the total RF communication time T3 required when data to be written with the RF tag 30 is transferred between the RFID communication unit 10 and the RF tag 30, and the response transfer time T2 required when the transfer result with the RFID communication unit 10 and the RF tag 30 is transferred to the PLC 50. Therefore, the total processing time TAT can be shortened, and high-speed data transfer can be realized.

### [Embodiment 2]

Embodiment 2 of the present invention is described below. In addition, for convenience of explanation, the members having the same functions as those of the members described in Embodiment 1 are designated by the same reference numerals, and the description thereof is not repeated.

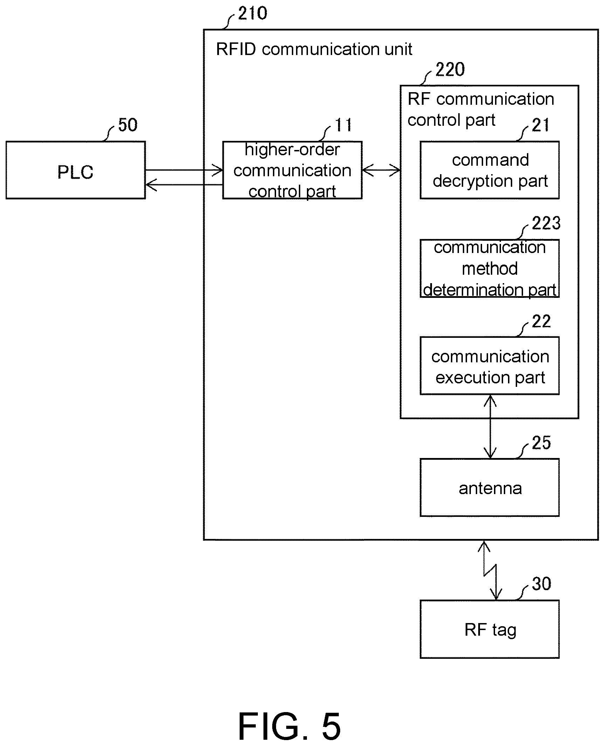

FIG. 5 is a block diagram showing a main configuration of a RFID communication unit 210 according to Embodiment 2. As shown in the same diagram, in addition to the configuration of the RFID communication unit 10 of Embodiment 1, a RF communication control part 220 includes a communication method determination part 223.

### [About determination of reading method]

The communication method determination part 223 divides the data subjected to at least one of reading and writing with the RF tag 30 into a data exchange size that is communicable in one communication period in the higher-order communication control part 11, and selects the division transfer method for transferring the data by a plurality of times of communication or the batch transfer method for collectively transferring the data subjected to at least one of reading and writing with the RF tag by one communication.

Further, as for the transfer of the data subjected to at least one of reading and writing with the RF tag 30, the communication method determination part 223 calculates each total processing time TAT of the division transfer method and the batch transfer method, and selects a transfer method having the shorter total processing time TAT.

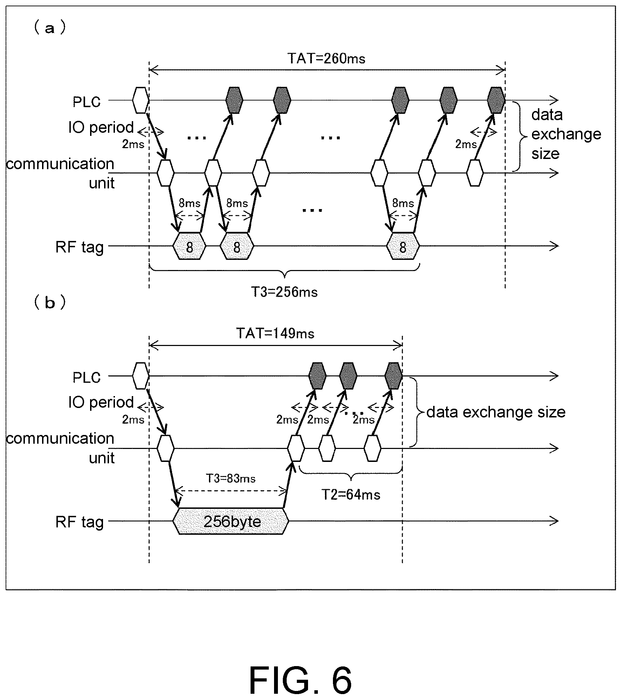

(a) and (b) of FIG. 6 are diagrams showing the total processing time TAT when the communication period between the PLC 50 and the RFID communication unit 210 is 2 ms, the data exchange size between the PLC 50 and the RFID communication unit 10 is 8 bytes, and a total data reading size is 256 bytes, (a) of FIG. 6 shows the flow of data when the data is read by the division transfer method. (b) of FIG. 6 shows the flow of data when the data is read by the batch transfer method.

As shown in (a) of FIG. 6, the RFID communication unit 210 divides the data read with the RF tag 30 into 8 bytes which is a data exchange size that is communicable in one communication period in the higher-order communication control part 11, and transfers the data by a plurality of times of communication. The communication time required for the RFID communication unit 210 to read 8 bytes of data by one communication from the RF tag 30 is 8 ms. The RFID communication unit 210 performs communication with the RF tag 30 by 32 times and reads 8 × 32 times = 256 bytes of data. The total communication time required for the RFID communication unit 210 to read 256 bytes of data from the RF tag 30 is 8 ms × 32 times = 256 ms.

The RFID communication unit 210 concurrently transfers the 8 bytes of data read from the RF tag 30 to the PLC 50 and reads next 8 bytes of data from the RF tag 30.

As shown in (a) of FIG. 6, the total processing time TAT of reading data from the RF tag 30 by the division transfer method is 260 ms which is the sum of a total RF communication time T3 = 256 ms, a command transfer time of 2 ms and a response transfer time of 2 ms.

Meanwhile, as shown in (b) of FIG. 6, in the batch transfer method, the RFID communication unit 210 receives a read command from the PLC 50 and collectively reads 256 bytes of data from the RF tag 30. The RFID communication unit 210 can collectively read the 256 bytes of data from the RF tag 30 in 83 ms. Subsequently, the RFID communication unit 210 divides the 256 bytes of data read from the RF tag 30 into each 8 bytes which is a data exchange size that is communicable in one communication period in the higher-order communication control part 11, and transfers the data to the PLC 50 by 32 times. Because the communication period between the PLC 50 and the RFID communication unit 210 is 2 ms, the time required to transfer data from the RFID communication unit 210 to the PLC 50 is 2 ms × 32 times, that is, 64 ms.

Therefore, the total processing time TAT of reading data from the RF tag 30 by the batch transfer method is 149 ms which is the sum of a total RF communication time T3 = 83 ms, a command transfer time of 2 ms, and a time 64 ms of transferring the data read from the RF tag 30 from the RFID communication unit 210 to the PLC 50.

In this way, when the communication period between the PLC 50 and the RFID communication unit 210 is 2 ms and the data exchange size between the PLC 50 and the RFID communication unit 10 is 8 bytes, the total processing time TAT is shorter in the case that the data is read by the batch transfer method than in the case that the data is read by the division transfer method.

In this way, the RF communication control part 220 calculates, by the function of the communication method determination part 223, a command transfer time required to transfer the command from the PLC 50, a total RF communication time required when the data to be read with the RF tag 30 is transferred with the RF tag 30, and a to the PLC 50. Then, the communication method determination part 223 calculates each total processing time TAT of the division transfer method and the batch transfer method based on the command transfer time, the total RF communication time and the response transfer time. Based on each total processing time TAT of the division transfer method and the batch transfer method calculated by the function of the communication method determination part 223, the RF communication control part 220 selects the transfer method having the shorter total processing time to execute the reading with the RF tag.

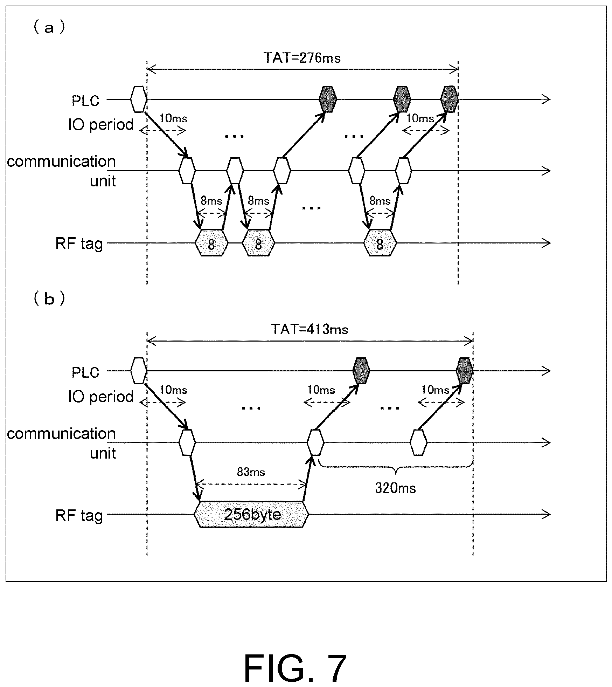

(a) and (b) of FIG. 7 are diagrams showing the total processing time TAT when the communication period between the PLC 50 and the RFID communication unit 210 is 10 ms, the data exchange size between the PLC 50 and the RFID communication unit 210 is 8 bytes, and a total data reading size is 256 bytes, (a) of FIG. 7 shows the flow of data when the data is read by the division transfer method. (b) of FIG. 7 shows the flow of data when the data is read by the batch transfer method.

As shown in (a) of FIG. 7, the RFID communication unit 210 divides the data read with the RF tag 30 into each 8 bytes which is a data exchange size that is communicable in one communication period in the higher-order communication control part 11, and transfers the data by a plurality of times of communication. The communication time required for the RFID communication unit 210 to read 8 bytes of data from the RF tag 30 by one communication is 8 ms. The RFID communication unit 210 performs communication with the RF tag 30 by 32 times and reads 8 × 32 times = 256 bytes of data. The total communication time required for the RFID communication unit 210 to read the 256 bytes of data from the RF tag 30 is 8 ms × 32 times = 256 ms.

The RFID communication unit 210 concurrently transfers the 8 bytes of data read from the RF tag 30 to the PLC 50 and reads next 8 bytes of data from the RF tag 30.

As shown in (a) of FIG. 7, the total processing time TAT of reading data from the RF tag 30 by the division transfer method is 276 ms which is the sum of a total RF communication time T3 = 256 ms, a command transfer time of 10 ms, and a response transfer time of 10 ms.

Meanwhile, as shown in (b) of FIG. 7, in the batch transfer method, the RFID communication unit 210 receives a read command from the PLC 50 and collectively reads 256 bytes of data from the RF tag 30. The RFID communication unit 210 can collectively read the 256 bytes of data from the RF tag 30 in 83 ms. Subsequently, the RFID communication unit 210 divides the 256 bytes of data read from the RF tag 30 into each 8 bytes which is a data exchange size that is communicable in one communication period in the higher-order communication control part 11, and transfers the data to the PLC 50 by 32 times. Because the transfer period between the PLC 50 and the RFID communication unit 210 is 10 ms once, the time required to transfer data from the RFID communication unit 210 to the PLC 50 is 10 ms × 32 times, that is, 320 ms.

Therefore, the total processing time TAT of reading data by the batch transfer method is 413 ms which is the sum of a total RF communication time T3 = 83 ms, a command transfer time of 10 ms, and a response transfer time of 320 ms.

In this way, when the communication period between the PLC 50 and the RFID communication unit 210 is 10 ms and the data exchange size between the PLC 50 and the RFID communication unit 210 is 8 bytes, the total processing time TAT is shorter in the case that the data is read by the division method than in the case that the data is read by the batch method.

In this way, when the data is read from the RF tag 30 and transferred to the PLC 50 in accordance with the command transferred from the PLC 50, whether the total processing time TAT is shorter when the data is read by the division transfer method or the total processing time TAT is shorter when the data is read by the batch transfer method depends on the data exchange size and the communication period between the PLC 50 and the RFID communication unit 210. Therefore, the RF communication control part 220 of the RFID communication unit 210 determines, by the function of the communication method determination part 223, whether the reading method of the data is the division transfer method or the batch transfer method in order that the total processing time TAT is the shortest. Thereby, the total processing time TAT can be shortened, and high-speed data transfer can be realized.

In addition, the data exchange size and the communication period between the PLC 50 and the RFID communication unit 210 can be set by a user operating the PLC 50. In initial communication processing between the PLC 50 and the RFID communication unit 210, information about the data exchange size and the communication period is passed to the RFID communication unit 210, and a periodic communication between the PLC 50 and the RFID communication unit 210 starts. The RF communication control part 220 of the RFID communication unit 210 determines, by the function of the communication method determination part 223, whether to set the transfer method as the division transfer method or the batch transfer method by using the information about the data exchange size and the communication period received from the PLC 50 as a parameter.

### [About determination of writing method]

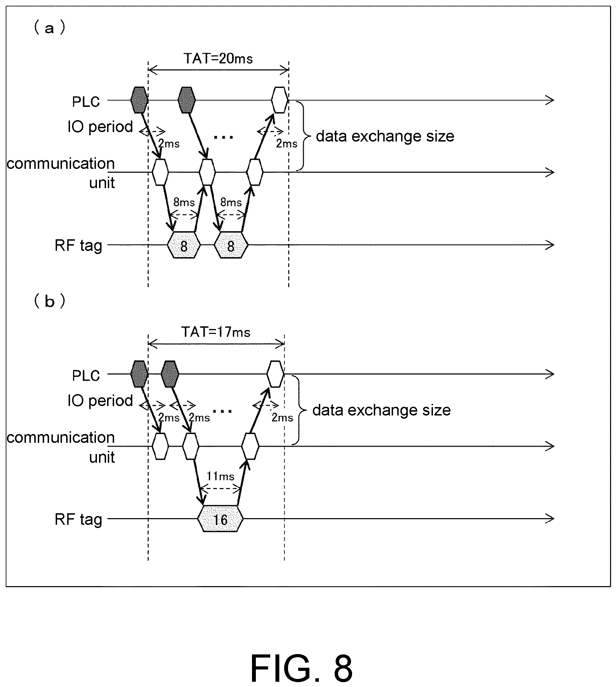

(a) and (b) of FIG. 8 are diagrams showing the total processing time TAT when the communication period between the PLC 50 and the RFID communication unit 210 is 2 ms, the data exchange size between the PLC 50 and the RFID communication unit 210 is 8 bytes, and a total data writing size is 16 bytes, (a) of FIG. 8 shows the flow of data when the data is written by the division transfer method. (b) of FIG. 8 shows the flow of data when the data is written by the batch transfer method.

As shown in (a) of FIG. 8, the RFID communication unit 210 divides the data written to the RF tag 30 into 8 bytes which is a data exchange size that is communicable in one communication period in the higher-order communication control part 11 and transfers the data by a plurality of times of communication. The communication time required for the RFID communication unit 210 to write 8 bytes of data by one communication with the RF tag 30 is 8 ms. The RFID communication unit 210 performs communication with the RF tag 30 twice and writes 8 × 2 times = 16 bytes of data. The total communication time required for the RFID communication unit 210 to write 16 bytes of data to the RF tag 30 is 8 ms × 2 times = 16 ms.

The RFID communication unit 210 concurrently writes 8 bytes of data with the RF tag 30 to the RF tag 30 and receives next 8 bytes of data from the PLC 50.

As shown in (a) of FIG. 8, the total processing time TAT of writing data to the RF tag 30 by the division transfer method is 20 ms which is the sum of a total RF communication time T3 = 16 ms, a command transfer time of 2 ms, and a response transfer time of 2 ms.

Meanwhile, as shown in (b) of FIG. 8, in the batch transfer method, the RFID communication unit 210 receives a write command from the PLC 50 and collectively writes 16 bytes of data to the RF tag 30. The RFID communication unit 210 can collectively write the 16 bytes of data to the RF tag 30 in 11 ms.

When the RFID communication unit 210 finishes writing the data for an entire writing size to the RF tag 30, the RFID communication unit 210 transfers a response notifying the completion of the writing to the PLC 50.

Therefore, the total processing time TAT of writing data by the batch transfer method is 17 ms which is the sum of a total RF communication time T3 = 11 ms, a command transfer time of 4 ms, and a response transfer time of 2 ms.

In this way, when the communication period between the PLC 50 and the RFID communication unit 210 is 2 ms and the data exchange size between the PLC 50 and the RFID communication unit 210 is 8 bytes, the total processing time TAT is shorter in the case that the data is written by the batch transfer method than in the case that the data is written by the division transfer method.

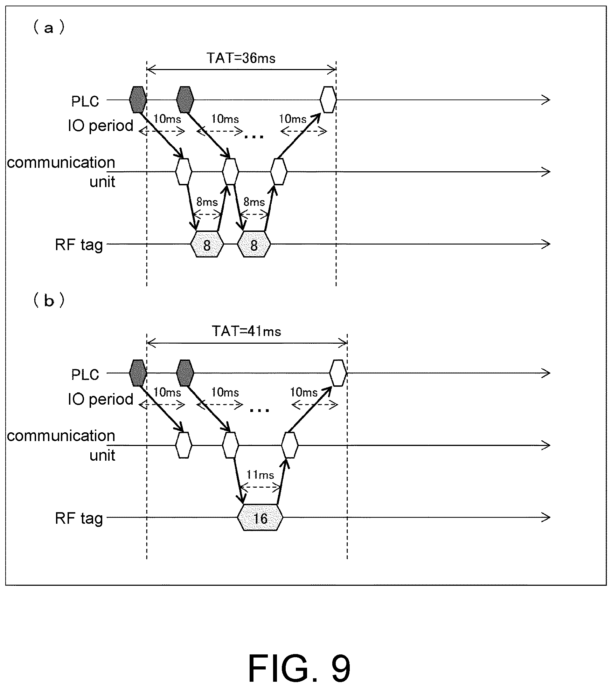

(a) and (b) of FIG. 9 are diagrams showing the total processing time TAT when the communication period between the PLC 50 and the RFID communication unit 210 is 10 ms, the data exchange size between the PLC 50 and the RFID communication unit 210 is 8 bytes, and a total data writing size is 16 bytes, (a) of FIG. 9 shows the flow of data when the data is written by the division transfer method. (b) of FIG. 9 shows the flow of data when the data is written by the batch transfer method.

As shown in (a) of FIG. 9, the RFID communication unit 210 divides the data written to the RF tag 30 into 8 bytes which is a data exchange size that is communicable in one communication period in the higher-order communication control part 11 and transfers the data by a plurality of times of communication. The communication time required for the RFID communication unit 210 to write 8 bytes of data in one communication with the RF tag 30 is 8 ms. The RFID communication unit 210 performs communication with the RF tag 30 twice and writes 8 × 2 times = 16 bytes of data. The total communication time required for the RFID communication unit 210 to write 16 bytes of data with the RF tag 30 is 8 ms × 2 times = 16 ms.

The RFID communication unit 210 concurrently writes 8 bytes of data with the RF tag 30 to the RF tag 30 and receives next 8 bytes of data from the PLC 50.

As shown in (a) of FIG. 9, the total processing time TAT of writing data with the RF tag 30 by the division transfer method is 36 ms which is the sum of a total RF communication time T3 = 16 ms, a command transfer time of 10 ms, and a response transfer time of 10 ms.

Meanwhile, as shown in (b) of FIG. 9, in the batch transfer method, the RFID communication unit 210 receives a write command from the PLC 50 and collectively writes 16 bytes of data to the RF tag 30. The RFID communication unit 210 can collectively write the 16 bytes of data to the RF tag 30 in 11 ms.

When the RFID communication unit 210 finishes writing the data for an entire writing size to the RF tag 30, the RFID communication unit 210 transfers a response notifying the completion of the writing to the PLC 50.

Therefore, the total processing time TAT of writing data by the batch transfer method is 41 ms which is the sum of a total RF communication time T3 = 11 ms, a command transfer time of 20 ms, and a response transfer time of 10 ms.

In this way, when the communication period between the PLC 50 and the RFID communication unit 210 is 10 ms and the data exchange size between the PLC 50 and the RFID communication unit 210 is 8 bytes, the total processing time TAT is shorter in the case that the data is written by the division transfer method than in the case that the data is written by the batch transfer method.

In this way, when the data is written to the RF tag 30 in accordance with a write command from the PLC 50, whether the total processing time TAT is shorter when the data is written by the division transfer method or the total processing time TAT is shorter when the data is written by the batch transfer method depends on the data exchange size and the communication period between the PLC 50 and the RFID communication unit 210.

Therefore, the RF communication control part 220 of the RFID communication unit 210 determines, by the function of the communication method determination part 223, whether the writing method of the data is the division transfer method or the batch transfer method in order that the total processing time TAT is the shortest. Thereby, the total processing time TAT can be shortened, and high-speed data transfer can be realized.

### [Embodiment 3]

Embodiment 3 of the present invention is described below. In addition, for convenience of explanation, the members having the same functions as those of the members described in Embodiment 1 are designated by the same reference numerals, and the description thereof is not repeated.

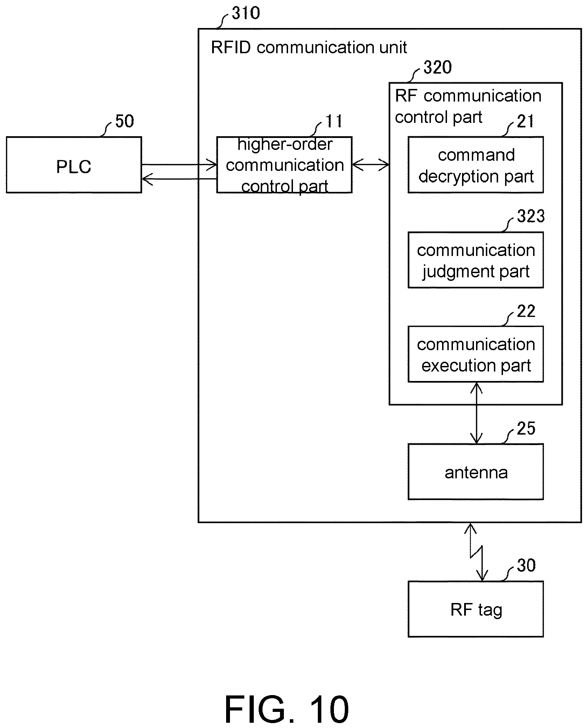

FIG. 10 is a block diagram showing a main configuration of a RFID communication unit 310 according to Embodiment 3. As shown in FIG. 10, in the RFID communication unit 310, in addition to the configuration of the RFID communication unit 10 of Embodiment 1, a RF communication control part 320 includes a communication judgment part 323.

The RFID communication unit 310 and the RF tag 30 communicate with each other via wireless communication. The wireless communication may be interrupted due to the influence of noise or the like in the surrounding environment. In this case, the communication between the RFID communication unit 310 and the RF tag 30 fails, and a retry of data transmission/reception occurs.

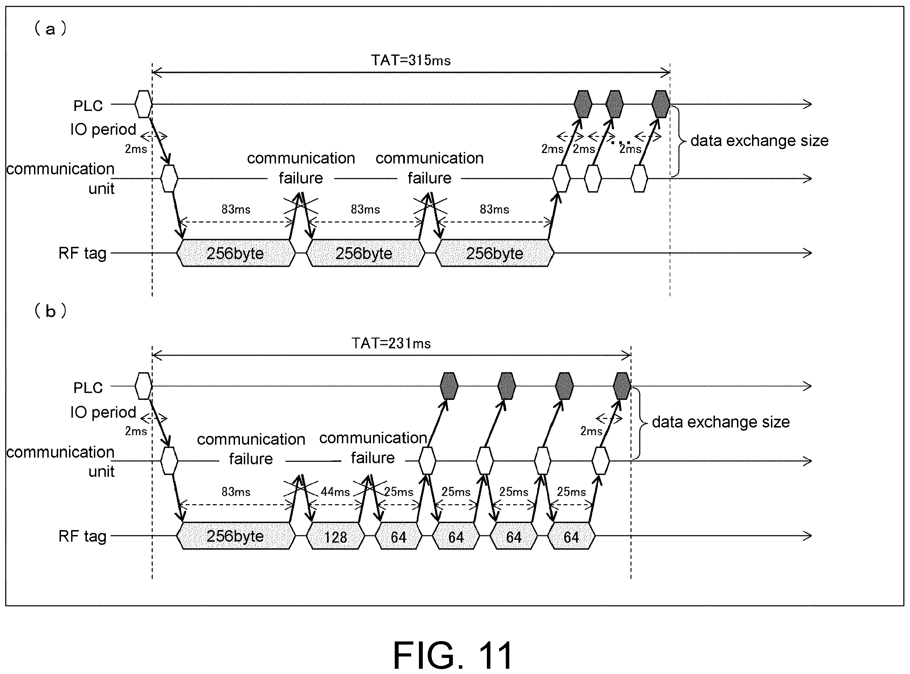

As shown in (a) of FIG. 11, it takes 83 ms for the RFID communication unit 310 to read 256 bytes of data in the batch transfer method for collectively reading a plurality of data from the RF tag 30. While the data is transmitted from the RF tag 30 to the RFID communication unit 310, if the communication between the RFID communication unit 310 and the RF tag 30 is interrupted and the data transfer fails, a retry of data reading occurs, and the reading of 256 bytes of data is performed again. When the communication between the RFID communication unit 310 and the RF tag 30 is interrupted twice and the data transfer fails twice, the reading of 256 bytes of data is performed three times, which takes 83 × 3 = 249 ms. The RFID communication unit 310 performs communication with the PLC 50 in a predetermined communication period to divide and transfer the data read from the RF tag 30 by the batch transfer method to the PLC 50. In this way, when the data is read from the RF tag 30 by the batch transfer method, if the communication between the RFID communication unit 310 and the RF tag 30 fails, the backtracking time for the retry of data reading is large, and thus the total processing time TAT of data reading becomes long.

Further, as in the case that the data is read from the RF tag 30 by the batch transfer method, when the data is written to the RF tag 30 by the batch transfer method, if the communication between the RFID communication unit 310 and the RF tag 30 is interrupted and the data transfer fails, a retry of data writing occurs, and the total processing time TAT of data writing becomes long.

The communication judgment part 323 executes retry efficiency processing described below in order to minimize the influence of the communication failure between the RFID communication unit 310 and the RF tag 30.

While the data is read and written with the RF tag 30, if the communication between the RFID communication unit 310 and the RF tag 30 is interrupted and the transfer fails, the communication judgment part 323 reduces the data size for batch transfer each time the transfer fails. For example, as shown in (b) of FIG. 11, while 256 bytes of data is collectively read from the RF tag 30, if the communication between the RFID communication unit 310 and the RF tag 30 is interrupted and the data transfer fails, the communication judgment part 323 halves the data size of the data read from the RF tag 30 at the time of retry to 128 bytes. Then, a retry is performed to read 128 bytes of data from the RF tag 30. If the communication between the RFID communication unit 310 and the RF tag 30 is interrupted and the data transfer fails again at the time of retry, the communication judgment part 323 halves the data size of the data read from the RF tag 30 at the time of a next retry to 64 bytes.

In this way, while at least one of data reading and data writing is being performed with the RF tag 30 by the batch transfer method, if the wireless communication with the RF tag 30 fails, the communication judgment part 323 reduces the data size of the data transferred with the RF tag 30 by one communication. Thereby, the efficiency of the data transfer retry is achieved when the communication with the RF tag 30 is interrupted and the transfer fails.

Furthermore, when the data size of the data transferred with the RF tag 30 by one communication is reduced to the exchange size of data exchanged with the PLC 50 in one communication period, the communication judgment part 323 switches the transfer method from the batch transfer method to the division transfer method, and concurrently executes the wireless communication with the RF tag 30 during the communication period in which the communication by the higher-order communication control part 11 is performed. According to these configurations, the data can be transferred efficiently.

Further, the communication judgment part 323 may have a function of measuring a noise level of the surrounding environment with respect to the communication between the RFID communication unit 310 and the RF tag 30. Then, when the noise level is high, the communication judgment part 323 may perform processing of reducing the data size of the data read and written with the RF tag 30 in advance.

### [Implementation example using software]

Control blocks of the RFID communication unit 10 (particularly, the higher-order communication control part 11, and the RF communication control part 20) may be realized by a logic circuit (hardware) formed in an integrated circuit (IC chip) or the like, or may be realized by a software.

In the latter case, the RFID communication unit 10 includes a computer executing an order of a program which is software that realizes each function. The computer includes, for example, one or more processors and a recording medium that stores the program and is computer-readable. Then, the objective of the present invention is achieved in a manner that the processor reads the program from the recording medium and executes the program in the computer. As the processor, for example, a central processing unit (CPU) can be used. As the recording medium, in addition to a "non-temporary tangible medium" such as a read only memory (ROM), a tape, a disk, a card, a semiconductor memory, a programmable logic circuit, or the like can be used. Further, a random access memory (RAM) or the like for developing the program may be further included. Further, the program may be supplied to the computer via an arbitrary transmission medium (communication network, broadcast wave and the like) capable of transmitting the program. In addition, one aspect of the present invention can also be realized in the form of a data signal which is embedded in a carrier wave and in which the program is embodied by electronic transmission.

### [Reference Signs List]

- 10, 210, 310: RFID communication unit
- 11: higher-order communication control part
- 20, 220, 320: RF communication control part
- 50: PLC (controller)
- 30: RF tag
- 223: communication method determination part

## Claims

1. A RFID communication unit (10, 210, 310), comprising:
a higher-order communication control part (11) for performing communication with a higher-order controller(50) in a predetermined communication period, wherein the higher-order controller(50) is external to the RFID communication unit(10, 210, 310), the higher-order controller(50) is configured to communicate with the RFID communication unit(10, 210, 310) by exchanging a plurality of data, each data having the same fixed data exchange size, and each data being communicated during a fixed communication period; and
a RF communication control part (20, 220, 320) for performing at least one of reading and writing of data with a RF tag (30) by wireless communication;
the RFID communication unit (10, 210, 310) being **characterized in that** the RF communication control part (20, 220, 320) is configured to select:
a division transfer method for dividing data subjected to at least one of reading and writing with the RF tag(30) into a plurality of data packets, each data packet having the same data exchange size and each data package being communicable in one communication period in the higher-order communication control part (11), and transferring each of the plurality of data packets to the higher-order controller (50) or to the RF tag (30) in the one communication period, wherein the RF communication control part (20, 220, 320) is configured to concurrently execute the wireless communication with the RF tag (30)during the communication period in which communication by the higher-order communication control part (11) is performed; or
a batch transfer method for collectively transferring data subjected to at least one of reading and writing with the RF tag (30), wherein the data is transferred to the RF tag (30) in one single communication period, and wherein the data is then transferred to, or was transferred beforehand from, the higher-order controller (50) in another communication session.

2. The RFID communication unit (10, 210, 310) according to claim 1,
wherein the RF communication control part(20, 220, 320) is configured to calculate a total processing time of each of the division transfer method and the batch transfer method regarding transfer of the data subjected to at least one of reading and writing with the RF tag(30), and is configured to select the transfer method which has a shorter total processing time.

3. The RFID communication unit (10, 210, 310) according to claim 2,
wherein the RF communication control part(20, 220, 320) is configured to calculate
the total processing time of each of the division transfer method and the batch transfer method by calculating
the total processing time of the division transfer method comprising
a command transfer time required to transfer a command from the controller (50),
a total RF communication time required when data subjected to at least one of reading and writing with the RF tag (30)is transferred with the RF tag(30), and
a response transfer time required when a transfer result with the RF tag(30) is transferred to the controller(50).

4. The RFID communication unit (10, 210, 310) according to claim 1, wherein
while at least one of reading and writing is being performed with the RF tag(30) by the batch transfer method, in the case that the wireless communication with the RF tag(30) fails, the RF communication control part(20, 220, 320) is configured to reduce the data size of the data transferred by one communication with the RF tag(30), and when the data size of the data transferred by one communication is reduced to the data exchange size, the RF communication control part(20, 220, 320) is configured to concurrently execute the wireless communication with the RF tag (30) during the communication period in which the communication by the higher-order communication control part (11) is performed by the division transfer method.

5. A method for controlling a RFID communication unit (10, 210, 310), comprising:
a step of performing, by a higher-order communication control part (11) of the RFID communication unit(10, 210, 310), communication with a higher-order controller(50) in a predetermined communication period, wherein the higher-order controller(50) is external to the RFID communication unit(10, 210, 310), the higher-order controller(50) communicates with the RFID communication unit (10, 210, 310) by exchanging a plurality of data, each data having the same fixed data exchange size, and each data being communicated during a fixed communication period; and
a step of performing, by a RF communication part of the RFID communication unit(10, 210, 310), at least one of reading and writing of data with a RF tag(30) by wireless communication; the method being **characterized in** further comprising:
a step of selecting, by the RF communication part of the RFID communication unit(10, 210, 310), a division transfer method or a batch transfer method, wherein
the division transfer method for dividing data subjected to at least one of reading and writing with the RF tag (30) into a plurality of data packets, each data packet having the same data exchange size and each data package being communicable in one communication period in the higher-order communication control part (11), and transferring each of the plurality of data packets to the higher-order controller(50) or to the RF tag (30) in the one communication period, wherein the wireless communication with the RF tag (30) is concurrently executed during the communication period in which the communication with the higher-order controller(50) is performed, and
the batch transfer method for collectively transferring data subjected to at least one of reading and writing with the RF tag (30), wherein the data is transferred to the RF tag(30) in one single communication period, and wherein the data is then transferred to, or was transferred beforehand from, the higher-order controller (50) in another communication session.

6. A product including one or more tangible computer-readable non-transitory storage media comprising computer-executable instructions which, when executed by a computer associated with a RFID communication unit(10, 210, 310), cause the RFID communication unit(10, 210, 310) to carry out all the steps of the method of claim 5.

## Patentansprüche

1. RFID-Kommunikationseinheit (10, 210, 310), umfassend:
ein Kommunikationssteuerteil höherer Ordnung (11) zum Durchführen von Kommunikation mit einer Steuerung höherer Ordnung (50) in einer vorbestimmten Kommunikationsperiode, wobei die Steuerung höherer Ordnung (50) außerhalb der RFID-Kommunikationseinheit (10, 210, 310) ist, die Steuerung höherer Ordnung (50) konfiguriert ist, um mit der RFID-Kommunikationseinheit (10, 210, 310) durch Austauschen einer Vielzahl von Daten zu kommunizieren, wobei alle Daten dieselbe feste Datenaustauschgröße aufweisen und alle Daten während einer festen Kommunikationsperiode kommuniziert werden; und
ein RF-Kommunikationssteuerteil (20, 220, 320) zum Durchführen von wenigstens einem von Lesen und Schreiben von Daten mit einem RF-Tag (30) durch drahtlose Kommunikation;
wobei die RFID-Kommunikationseinheit (10,210,310) **dadurch gekennzeichnet ist, dass** das RF-Kommunikationssteuerteil (20, 220, 320) konfiguriert ist, um auszuwählen:
ein Teilungsübertragungsverfahren zum Teilen von Daten, die wenigstens einem von Lesen und Schreiben mit dem RF-Tag (30) in eine Vielzahl von Datenpaketen unterzogen wurden, wobei jedes Datenpaket dieselbe Datenaustauschgröße aufweist und jedes Datenpaket in einer Kommunikationsperiode in dem Kommunikationssteuerteil höherer Ordnung (11) kommunizierbar ist, und Übertragen jedes der Vielzahl von Datenpaketen an die Steuerung höherer Ordnung (50) oder an das RF-Tag (30) in der einen Kommunikationsperiode, wobei das RF-Kommunikationssteuerteil (20, 220, 320) konfiguriert ist, um gleichzeitig die drahtlose Kommunikation mit dem RF-Tag (30) während der Kommunikationsperiode auszuführen, in der die Kommunikation durch das Kommunikationssteuerteil höherer Ordnung (11) durchgeführt wird; oder
ein Batch-Transfer-Verfahren zum kollektiven Übertragen von Daten, die wenigstens einem von Lesen und Schreiben mit dem RF-Tag (30) unterzogen wurden, wobei die Daten in einer einzigen Kommunikationsperiode an das RF-Tag (30) übertragen werden und wobei die Daten dann in einer anderen Kommunikationssitzung an die Steuerung höherer Ordnung (50) übertragen werden oder zuvor von dieser übertragen wurden.

2. RFID-Kommunikationseinheit (10, 210, 310) gemäß Anspruch 1,
wobei das RF-Kommunikationssteuerteil (20, 220, 320) konfiguriert ist, um eine Gesamtverarbeitungszeit des Teilungsübertragungsverfahrens und des Batch-TransferVerfahrens bezüglich der Übertragung der Daten zu berechnen, die wenigstens einem von Lesen und Schreiben mit dem RF-Tag (30) unterzogen werden, und konfiguriert ist, um das Übertragungsverfahren auszuwählen, das eine kürzere Gesamtverarbeitungszeit aufweist.

3. RFID-Kommunikationseinheit (10, 210, 310) gemäß Anspruch 2,
wobei das RF-Kommunikationssteuerteil (20, 220, 320) konfiguriert ist, um die Gesamtverarbeitungszeit des Teilungsübertragungsverfahrens und des Batch-TransferVerfahrens zu berechnen, durch berechnen
der Gesamtverarbeitungszeit des Teilungsübertragungsverfahrens, umfassend
eine Befehlsübertragungszeit, die erforderlich ist, um einen Befehl von der Steuerung (50) zu übertragen,
eine gesamte RF-Kommunikationszeit, die erforderlich ist, wenn Daten, die wenigstens einem von Lesen und Schreiben mit dem RF-Tag (30) unterzogen wurden, mit dem RF-Tag (30) übertragen werden, und
eine Antwortübertragungszeit, die erforderlich ist, wenn ein Übertragungsergebnis mit dem RF-Tag (30) an die Steuereinheit (50) übertragen wird.

4. RFID-Kommunikationseinheit (10, 210, 310) gemäß Anspruch 1, wobei
während wenigstens eines von Lesen und Schreiben mit dem RF-Tag (30) durch das Batch-Transfer-Verfahren durchgeführt wird, für den Fall, dass die drahtlose Kommunikation mit dem RF-Tag (30) fehlschlägt, das RF-Kommunikationssteuerteil (20, 220, 320) konfiguriert ist, um die Datengröße der Daten, übertragen durch eine Kommunikation mit dem RF-Tag (30) zu reduzieren, und wenn die Datengröße der Daten, übertragen durch eine Kommunikation auf die Datenaustauschgröße reduziert ist, das RF-Kommunikationssteuerteil (20, 220, 320) konfiguriert ist, um gleichzeitig die drahtlose Kommunikation mit dem RF-Tag (30) während der Kommunikationsperiode auszuführen, in der die Kommunikation durch das Kommunikationssteuerteil höherer Ordnung (11) durch das Teilungsübertragungsverfahren durchgeführt wird.

5. Verfahren zum Steuern einer RFID-Kommunikationseinheit (10, 210, 310), umfassend:
einen Schritt des Durchführens einer Kommunikation mit einer Steuerung höherer Ordnung (50) in einer vorbestimmten Kommunikationsperiode durch ein Kommunikationssteuerteil höherer Ordnung (11) der RFID-Kommunikationseinheit (10, 210, 310), wobei die Steuerung höherer Ordnung (50) außerhalb der RFID-Kommunikationseinheit ( 10, 210, 310) ist, wobei die Steuerung höherer Ordnung (50) mit der RFID-Kommunikationseinheit (10, 210, 310) kommuniziert, indem sie eine Vielzahl von Daten austauscht, wobei jedes Datenpaket dieselbe feste Datenaustauschgröße aufweist und jedes Datenpaket während einer festen Kommunikationsperiode kommuniziert wird; und
einen Schritt des Ausführens von wenigstens einem von Lesen und Schreiben von Daten mit einem RF-Tag (30), durch ein RF-Kommunikationsteil der RFID-Kommunikationseinheit (10, 210, 310) mittels drahtloser Kommunikation; wobei das Verfahren **dadurch gekennzeichnet ist, dass** es ferner umfasst:
einen Schritt des Auswählens eines Teilungsübertragungsverfahrens oder eines Batch-Transfer-Verfahrens durch das RF-Kommunikationsteil der RFID-Kommunikationseinheit (10, 210, 310), wobei
das Teilungsübertragungsverfahren zum Teilen von Daten, die wenigstens einem von Lesen und Schreiben mit dem RF-Tag (30) unterzogen werden, in eine Vielzahl von Datenpaketen, wobei jedes Datenpaket dieselbe Datenaustauschgröße aufweist und jedes Datenpaket in einer Kommunikationsperiode in dem Kommunikationssteuerteil höherer Ordnung (11) übertragbar ist, und Übertragen jedes der Vielzahl von Datenpaketen an die Steuerung höherer Ordnung (50) oder an den RF-Tag (30) in der einen Kommunikationsperiode, wobei die drahtlose Kommunikation mit dem RF-Tag (30) gleichzeitig während der Kommunikationsperiode durchgeführt wird, in der die Kommunikation mit der Steuerung höherer Ordnung (50) durchgeführt wird, und
das Batch-Transfer-Verfahren zum kollektiven Übertragen von Daten, die wenigstens einem von Lesen und Schreiben mit dem RF-Tag (30) unterzogen wurden, wobei die Daten in einer einzigen Kommunikationsperiode an das RF-Tag (30) übertragen werden und wobei die Daten dann in einer anderen Kommunikationssitzung an die Steuerung höherer Ordnung (50) übertragen werden oder zuvor von dieser übertragen wurden.

6. Produkt, das ein oder mehrere materielle computerlesbare nichtflüchtige Speichermedien enthält, die computerausführbare Anweisungen umfassen, die, wenn sie von einem Computer ausgeführt werden, der mit einer RFID-Kommunikationseinheit (10, 210, 310) verbunden ist, bewirken, dass die RFID-Kommunikationseinheit (10, 210, 310) alle Schritte des Verfahrens gemäß Anspruch 5 durchführt.

## Revendications

1. Unité de communication RFID (10, 210, 310), comprenant :
une partie de commande de communication d'ordre supérieur (11) pour réaliser une communication avec un dispositif de commande d'ordre supérieur (50) au cours d'une période de communication prédéterminée, dans laquelle le dispositif de commande d'ordre supérieur (50) est externe à l'unité de communication RFID (10, 210, 310), le dispositif de commande d'ordre supérieur (50) est configuré pour communiquer avec l'unité de communication RFID (10, 210, 310) par l'échange d'une pluralité de données, chaque donnée présentant la même taille d'échange de données fixe, et chaque donnée étant communiquée au cours d'une période de communication fixe ; et
une partie de commande de communication RF (20, 220, 320) pour réaliser au moins l'une parmi la lecture et l'écriture de données avec une étiquette RF (30) par communication sans fil ;
l'unité de communication RFID (10, 210, 310) étant **caractérisée en ce que** la partie de commande de communication RF (20, 220, 320) est configurée pour sélectionner :
un procédé de transfert par division pour diviser des données soumises à au moins l'une parmi la lecture et l'écriture avec l'étiquette RF (30) dans une pluralité de paquets de données, chaque paquet de données présentant la même taille d'échange de données et chaque paquet de données pouvant être communiqué au cours d'une période de communication dans la partie de commande de communication d'ordre supérieur (11), et transférer chacun de la pluralité de paquets de données au dispositif de commande d'ordre supérieur (50) ou à l'étiquette RF (30) au cours de la période de communication, dans laquelle la partie de commande de communication RF (20, 220, 320) est configurée pour exécuter simultanément la communication sans fil avec l'étiquette RF (30) au cours de la période de communication dans laquelle une communication par la partie de commande de communication d'ordre supérieur (11) est réalisée ; ou
un procédé de transfert par lots pour transférer collectivement des données soumises à au moins l'une parmi la lecture et l'écriture avec l'étiquette RF (30), dans laquelle les données sont transférées à l'étiquette RF (30) au cours d'une période de communication unique, et dans laquelle les données sont ensuite transférées au, ou ont été préalablement transférées depuis le, dispositif de commande d'ordre supérieur (50) au cours d'une autre session de communication.

2. Unité de communication RFID (10, 210, 310) selon la revendication 1,
dans laquelle la partie de commande de communication RF (20, 220, 320) est configurée pour calculer un temps de traitement total de chacun du procédé de transfert par division et du procédé de transfert par lots en ce qui concerne un transfert des données soumises à au moins l'une parmi la lecture et l'écriture avec l'étiquette RF (30), et est configurée pour sélectionner le procédé de transfert présentant un temps de traitement total plus court.

3. Unité de communication RFID (10, 210, 310) selon la revendication 2,
dans laquelle la partie de commande de communication RF (20, 220, 320) est configurée pour calculer
le temps de traitement total de chacun du procédé de transfert par division et du procédé de transfert par lots par le calcul
du temps de traitement total du procédé de transfert par division comprenant
un temps de transfert d'instruction nécessaire pour transférer une instruction depuis le dispositif de commande (50),
un temps de communication RF total nécessaire lorsque des données soumises à au moins l'une parmi la lecture et l'écriture avec l'étiquette RF (30) sont transférées avec l'étiquette RF (30), et
un temps de transfert de réponse nécessaire lorsqu'un résultat de transfert avec l'étiquette RF (30) est transféré au dispositif de commande (50) .

4. Unité de communication RFID (10, 210, 310) selon la revendication 1, dans laquelle
pendant qu'au moins l'une parmi la lecture et l'écriture est en cours de réalisation avec l'étiquette RF (30) par le procédé de transfert par lots, en cas d'échec de la communication sans fil avec l'étiquette RF (30), la partie de commande de communication RF (20, 220, 320) est configurée pour réduire la taille de données des données transférées par une communication avec l'étiquette RF (30), et, lorsque la taille de données des données transférées par une communication est réduite à la taille d'échange de données, la partie de commande de communication (20, 220, 320) est configurée pour exécuter simultanément la communication sans fil avec l'étiquette RF (30) au cours de la période de communication dans laquelle la communication par la partie de commande de communication d'ordre supérieur (11) est réalisée par le procédé de transfert par division.

5. Procédé de commande d'une unité de communication RFID (10, 210, 310), comprenant :
une étape de réalisation, par une partie de commande de communication d'ordre supérieur (11) de l'unité de communication RFID (10, 210, 310), d'une communication avec un dispositif de commande d'ordre supérieur (50) au cours d'une période de communication prédéterminée, dans lequel le dispositif de commande d'ordre supérieur (50) est externe à l'unité de communication RFID (10, 210, 310), le dispositif de commande d'ordre supérieur (50) communique avec l'unité de communication RFID (10, 210, 310) par l'échange d'une pluralité de données, chaque donnée présentant la même taille d'échange de données fixe, et chaque donnée étant communiquée au cours d'une période de communication fixe ; et
une étape de réalisation, par une partie de communication RF de l'unité de communication RFID (10, 210, 310), d'au moins l'une parmi la lecture et l'écriture de données avec une étiquette RF (30) par communication sans fil ; le procédé étant **caractérisé en ce qu'**il comprend en outre :
une étape de sélection, par la partie de communication RF de l'unité de communication RFID (10, 210, 310), d'un procédé de transfert par division ou d'un procédé de transfert par lots, dans lequel
le procédé de transfert par division est pour diviser des données soumises à au moins l'une parmi la lecture et l'écriture avec l'étiquette RF (30) dans une pluralité de paquets de données, chaque paquet de données présentant la même taille d'échange de données et chaque paquet de données pouvant être communiqué au cours d'une période de communication dans la partie de commande de communication d'ordre supérieur (11), et transférer chacun de la pluralité de paquets de données au dispositif de commande d'ordre supérieur (50) ou à l'étiquette RF (30) au cours de la période de communication, dans lequel la communication sans fil avec l'étiquette RF (30) est exécutée simultanément au cours de la période de communication dans laquelle la communication avec le dispositif de commande d'ordre supérieur (50) est réalisée, et
le procédé de transfert par lots est pour transférer collectivement des données soumises à au moins l'une parmi la lecture et l'écriture avec l'étiquette RF (30), dans lequel les données sont transférées à l'étiquette RF (30) au cours d'une période de communication unique, et dans lequel les données sont ensuite transférées au, ou ont été préalablement transférées depuis le, dispositif de commande d'ordre supérieur (50) au cours d'une autre session de communication.

6. Produit comprenant un ou plusieurs supports de stockage tangibles non transitoires lisibles par ordinateur comprenant des instructions exécutables par ordinateur qui, lorsqu'elles sont exécutées par un ordinateur associé à une unité de communication RFID (10, 210, 310), amènent l'unité de communication RFID (10, 210, 310) à réaliser toutes les étapes du procédé selon la revendication 5.
